(19)

**Europäisches Patentamt**
**European Patent Office**
**Office européen des brevets**

(11) **EP 4 697 154 A1**

(12) **EUROPEAN PATENT APPLICATION**

(43) Date of publication:
**18.02.2026 Bulletin 2026/08**

(21) Application number: **25192349.6**

(22) Date of filing: **29.07.2025**

(51) International Patent Classification (IPC):
**G06F 3/06** (2006.01)   **G06F 12/0802** (2016.01)

(52) Cooperative Patent Classification (CPC):
**G06F 3/0679; G06F 3/061; G06F 3/0659;**
**G06F 3/0656**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **13.08.2024 US 202463682704 P**
**03.03.2025 US 202519069084**

(71) Applicant: **Samsung Electronics Co., Ltd.**
**Suwon-si, Gyeonggi-do 16677 (KR)**

(72) Inventors:
• **LI, Zongwang**
**San Jose, CA 95134 (US)**
• **PITCHUMANI, Rekha**
**San Jose, CA 95134 (US)**
• **KI, Yang Seok**
**San Jose, CA 95134 (US)**

(74) Representative: **Kuhnen & Wacker**
**Patent- und Rechtsanwaltsbüro PartG mbB**
**Prinz-Ludwig-Straße 40A**
**85354 Freising (DE)**

(54) **SYSTEMS AND METHODS FOR DATA COMMAND PROCESSING**

(57)    Systems and methods for data command processing are disclosed. A storage device includes a first storage medium (122), a second storage medium (124), and a processor (120). The processor (120) may be configured to: receive from a computing device (100) a first command associated with first data; search the first storage medium (122) for processing the first command; and based on the search of the first storage medium (122), transmit a message to the computing device (100). Based on a transmission of the message, the storage device may be configured to receive a second command associated with the first data from the computing device (100).

FIG. 1

EP 4 697 154 A1

## Description

FIELD

One or more aspects of embodiments according to the present disclosure relate to storage devices, and more particularly, to processing data store and data load commands.

BACKGROUND

An application may interact with a storage or memory device (collectively referenced as storage device) for reading (or loading) and writing (or storing) data. Latencies are generally involved in accessing the storage device. The type of latency involved may depend on the storage medium included in the storage device. Certain storage media have lower latencies than other storage media.

The above information disclosed in this Background section is only for enhancement of understanding of the background of the present disclosure, and therefore, it may contain information that does not form prior art.

SUMMARY

One or more embodiments of the present disclosure are directed to a storage device that includes a first storage medium, a second storage medium, and a processor. The processor may be configured to: receive from a computing device a first command associated with first data; search the first storage medium for processing the first command; and based on the search of the first storage medium, transmit a message to the computing device. Based on a transmission of the message, the storage device may be configured to receive a second command associated with the first data from the computing device.

In some embodiments, the first command includes a command to load the first data. In some embodiments, based on the search of the first storage medium, the processor is further configured to retrieve the first data from the second storage medium and store the first data in the first storage medium.

In some embodiments, the processor is further configured to: retrieve the first data from the first storage medium based on receipt of the second command and transmit the first data to the computing device.

In some embodiments, the first command includes a command to store the first data. In some embodiments, based on the search of the first storage medium, the processor is further configured to: identify second data in the second storage medium associated with an address of the first data; write the second data into the first storage medium; and update the second data with the first data.

In some embodiments, the message includes a criterion. The processor may be further configured to receive the second command based on the computing device detecting the fulfillment of the criterion.

In some embodiments, the processor is further configured to: determine estimated latency of the storage device; and determine the criterion based on the estimated latency.

In some embodiments, the message includes a flag. The processor may be further configured to receive the second command based on the computing device detecting the flag.

In some embodiments, the second command includes a command to load or store the first data.

In some embodiments, the second command includes a command for receiving status of writing the first data.

In some embodiments, the first storage medium includes a volatile memory, and the second storage medium includes non-volatile memory.

One or more embodiments of the present disclosure is directed to a method that includes: receiving by a storage device a first command associated with first data; searching by the storage device a first storage medium of the storage device for processing the first command; and based on searching the first storage medium, transmitting a message to a computing device, wherein based on the message, the computing device is configured transmit a second command associated with the first data.

These and other features, aspects and advantages of the embodiments of the present disclosure will be more fully understood when considered with respect to the following detailed description, appended claims, and accompanying drawings. Of course, the actual scope of the invention is defined by the appended claims.

BRIEF DESCRIPTION OF THE DRAWINGS

Non-limiting and non-exhaustive embodiments of the present embodiments are described with reference to the following figures, wherein like reference numerals refer to like parts throughout the various views unless otherwise specified.

FIG. 1 depicts a block diagram of a system for processing data commands according to one or more embodiments;
FIG. 2 depicts a block diagram of a host coupled to a storage controller over one or more data communication links according to one or more embodiments;
FIG. 3 depicts a conceptual diagram of a retry command generated by a response engine according to one or more embodiments;
FIG. 4 depicts a flow diagram of a process for data command processing by a storage device according to one or more embodiments;
FIG. 5 depicts another flow diagram of a process for data command processing by a storage device according to one or more embodiments;

FIG. 6 depicts a block diagram of a process for identifying a retry latency according to one or more embodiments; and

FIG. 7 depicts a flow diagram of a process for sending and receiving commands to and from a storage device according to one or more embodiments.

DETAILED DESCRIPTION

Hereinafter, example embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, descriptions thereof may not be repeated. Further, in the drawings, the relative sizes of elements, layers, and regions may be exaggerated and/or simplified for clarity.

Embodiments of the present disclosure are described below with reference to block diagrams and flow diagrams. Thus, it should be understood that each block of the block diagrams and flow diagrams may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments can produce specifically-configured machines performing the steps or operations specified in the block diagrams and flow diagrams. Accordingly, the block diagrams and flow diagrams support various combinations of embodiments for performing the specified instructions, operations, or steps.

In addition, a feature of embodiments of the present disclosure may be combined or combined with one or more other features, partially or entirely, and may be operated in various ways, and an embodiment may be implemented independently of one or more other embodiments, or in conjunction with the one or more other embodiments.

In general terms an application on a host computing device (referred to as a "host") may need to store and load data while the application is executed. If data that is to be loaded is present in the host's cache memory or primary memory (collectively referred to as host memory), there may be no need to access an auxiliary storage device where the data may be stored. The data may be retrieved from the host memory with low latency.

If the data is not present in the host memory (e.g., a cache miss), the data may be retrieved from the storage device and/or memory expansion device (e.g., a CXL.mem/CXL.cache device) (collectively referred to as a "storage device"). The latencies involved in accessing the storage device may differ depending on the storage medium storing the data. For example, the storage device may have both a fast storage medium (e.g., dynamic random access memory (DRAM)) and a slow storage medium (e.g., NAND flash memory). The latencies of the fast storage medium may be lower than the latencies of the slow storage medium.

The latencies experienced by the storage device in processing a data command such as a data load or store command from the host may stall execution of a central processing unit (CPU) core of the host. For example, the host CPU may need to wait for data requested in a load command before continuing to process another instruction. The speed in which the data is returned may depend on the latency of the storage device that stores the data.

The host may employ an out-of-order buffer to improve CPU stalls. The out-of-order buffer may store instructions to be processed by the CPU. If the CPU detects a stall in one instruction, the CPU may move to process another instruction in the buffer. Even with a large out-of-order buffer, however, the buffer may be saturated with long latency instructions that may cause the CPU to experience stalling, resulting in degraded performance of the host.

In general terms, embodiments of the present disclosure are directed to systems and methods for processing data commands or requests from the host, such as load and store commands. In some embodiments, the storage device includes a response engine that is configured to determine whether the command resulted in a cache hit or cache miss. A cache hit may be determined if the memory locations of data to be loaded or stored is found in a fast storage medium (e.g., DRAM) of the storage device. A cache miss may be determined if the memory locations are not found in the fast storage medium.

If the data command results in a cache hit, the storage device may retrieve or store data from or to the fast storage medium, and return an appropriate response to the requesting host. For example, for a load command, the data that is requested may be returned to the host. For a store command, the data to be stored may be written to the fast storage medium.

If the data command results in a cache miss, the storage device may need to access the slow storage medium (e.g., NAND), to load or store the requested data. In one embodiment, the response engine returns a retry message while the storage device continues to take steps to load or store the requested data. The retry command may be for prompting the host to retry the data command after a retry period. The retry period may be provided by the response engine based on estimated latency of the storage device. Because the retry message may be returned (e.g., promptly returned) before access of the slow storage medium has been completed, the latency of the storage device in the event of a cache miss may be similar to the latency of a cache hit (e.g., same or lower than the device DRAM latency). This allows the latency of responses by the storage device to be substantially the same regardless of whether a data command results in a cache hit or a cache miss.

In some embodiments, the host CPU receives the retry message and removes or clears the instruction associated with the message from its instruction buffer, helping reduce the CPU stall that may otherwise be encountered due to the CPU waiting for data to be retrieved from the storage medium. This may help avoid performance downgrade of the host CPU due to such stalls.

In some embodiments, the host CPU waits an amount of time indicated in the retry message and transmits the data command again. The retry period may be set so as to give sufficient time to the storage device to retrieve data from the slow storage medium into the fast storage medium so that the retried data command may be fulfilled from the fast storage medium. In this manner, the latency of processing the retried data command may be the latency of retrieving or writing data to the fast storage medium. Because the retry period is calculated and provided by the storage device based on predicting latency of the storage device, the transmitting of the retry command by the CPU is performed more efficiently and helps improve CPU core utilization.

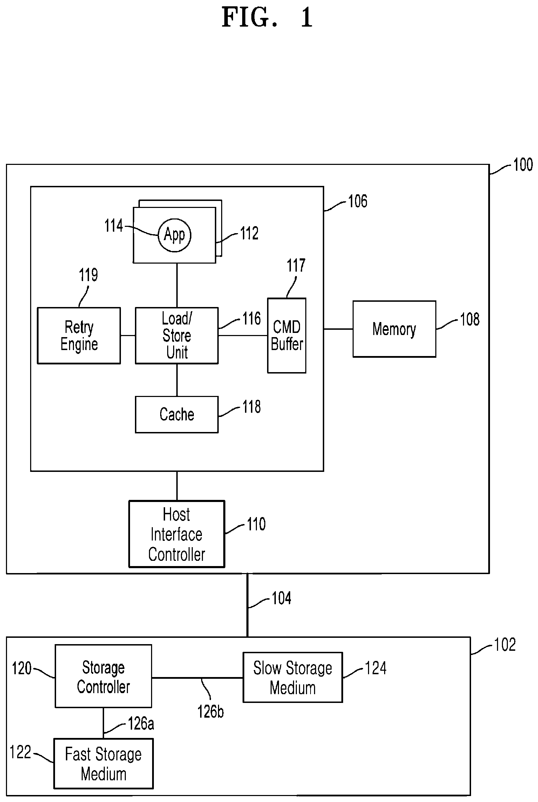

FIG. 1 depicts a block diagram of a system for processing load and store commands (collectively referred to as data commands) according to one or more embodiments. The system may include a host computing device ("host") 100 coupled to an attached storage device 102 over one or more data communication links 104. In some embodiments, the data communication links 104 may include various general-purpose interfaces such as, for example, Ethernet, Universal Serial Bus (USB), and/or any wired or wireless data communication link.

The host 100 may include a processor 106, primary memory 108 (e.g., it may be referred to as main memory)), and host interface controller 110. The processor 106 may include one or more central processing unit (CPU) cores 112 configured to run one or more applications 114 based on computer program instructions stored in the primary memory 108. The primary memory 108 may include volatile memory (e.g., random access memory (RAM)) and/or non-volatile memory (e.g., read only memory (ROM)). For example, the primary memory 108 may include a dynamic random access memory (DRAM) for storing the computer program instructions and/or data generated by the storage device 102.

The application 114 may be any application configured to transmit commands (e.g., load and store commands) to the storage device 102. For example, the application 114 may be a big data analysis application, e-commerce application, database application, machine learning application, and/or the like. Results of the data commands may be used by the application 114 to generate an output.

In some embodiments, the data commands are processed by a load/store unit 116 during the running of the application 114. In some embodiments, the data commands or instructions associated with the data commands (collectively referenced as data commands) are placed in a command buffer 117. The command buffer 117 may include a CPU out-of-order buffer, load queue, store queue, and/or the like. Because the command buffer 117 may be of a set depth, the command buffer 117 may run the risk of being saturated (e.g., become full) and prevent further commands to be placed in the buffer for processing by the load/store unit 116, if there is a delay in the removing or clearing of existing commands in the buffer 117.

In some embodiments, the load/store unit 116 interfaces with a cache memory 118 (also simply referred to as "memory", "host cache memory" or "cache") to process the data commands. The cache memory 118 may be dedicated to one of the CPU cores 112, or shared by various ones of the CPU cores.

The cache memory 118 may include, for example, a level one (L1) cache coupled to level two (L2) cache coupled to a last level or level 3 (L3) cache. The L3 cache may in turn be coupled to the primary memory 108. In some embodiments, one or more of the L1, L2, or L3 cache may be included as part of the load/store unit 116 and/or the primary memory 108.

In order for an application 114 to use data generated by the storage device or memory expander 102, the data may be loaded into the cache memory 118, and the application 114 may consume the data from the cache memory 118. If the data to be consumed is not already in the cache memory 118, the load/store unit 116 may query other memory devices in the memory hierarchy to find the data. For example, if the data that is sought is not in the L1 cache, the load/store unit 116 may query the L2 cache, and if not in the L2 cache, query the L3 cache, and if not in the L3 cache, query the primary memory 108. If the data is not in the primary memory 108, the load/store unit 116 may request the data from the storage device or memory expander 102 via the host interface controller 110.

The host interface controller 110 may include physical connections as well as software instructions which may be executed by the processor 106. In some embodiments, the host interface controller 110 allows the host 100 and the storage device 102 to send and receive data using a protocol such as, for example, CXL, although embodiments are not limited thereto.

In addition or in lieu of CXL, the host interface controller 110 may use other protocols such as Cache Coherent Interconnect for Accelerators (CCIX), dual in-line memory module (DIMM) interface, Small Computer System Interface (SCSI), Non Volatile Memory Express (NVMe), Peripheral Component Interconnect Express (PCIe), remote direct memory access (RDMA) over Ethernet, Serial Advanced Technology Attachment (SATA), Fiber Channel, Serial Attached SCSI (SAS), NVMe over Fabric (NVMe-oF), iWARP protocol, Infini-Band protocol, 5G wireless protocol, Wi-Fi protocol, Bluetooth protocol, and/or the like.

The load/store unit 116 may generate a data command in response to execution of an instruction by the application 114 that uses data. A cache miss may occur if the data is not available in the cache memory 118 or the primary memory 108. In this case, the load/store unit 116 may request the data from the storage device 102.

The storage device 102 may take the form of a solid state drive (SSD), persistent memory, and/or the like. In some embodiments, the storage device 102 includes (or is embodied as) an SSD with cache coherency and/or computational capabilities.

In some embodiments, the storage device 102 includes a storage controller 120, fast storage medium 122, and slow storage medium 124 (e.g., a non-volatile memory (NVM) such as NAND flash memory). In some embodiments the storage device 102 is configured to present a memory space accessible to the host 100 using memory load/store commands, and the size of the memory space may be based on a size of the slow storage medium 124. In such embodiments, the storage device 102 may be referred to as a "memory expander" or "memory expansion device" (e.g., because a size of a memory is expanded using the slow storage medium 124). The storage device 102 may fetch data from the slow storage medium 124 to the fast storage medium 122 to reduce data access latencies.

The fast storage medium 122 may be high-performing memory of the storage device 102, and may include (or may be) volatile memory, for example, such as DRAM, but the present disclosure is not limited thereto, and the fast storage medium 122 may be any suitable kind of high-performing volatile or non-volatile memory. Although a single fast storage medium 122 is depicted for simplicity sake, a person of skill in the art should recognize that the storage device 102 may include other local memory for temporarily storing other data for the storage device.

In some embodiments, the fast storage medium 122 is used and managed as cache memory. In this regard, the fast storage medium (also referred to as a cache) 122 may store copies of data stored in the slow storage medium 124. For example, data that is requested by the load/store unit 116 may be copied from the slow storage medium 124 to the fast storage medium 122 if not already there, for allowing the data to be retrieved from the fast storage medium 122 instead of the slow storage medium 124. In some embodiments, the fast storage medium 122 has a lower access latency than the slow storage medium 124.

The slow storage medium 124 may persistently store data received, for example, from the host 100. The slow storage medium 124 may include, for example, NAND flash memory, but the present disclosure is not limited thereto, and the slow storage medium 124 may include any suitable kind of memory for storing the data according to an implementation of the storage device 102 (e.g., magnetic disks, tape, optical disks, and/or the like).

The storage controller 120 may be connected to the slow storage medium 124 and the fast storage medium 122 over one or more storage interfaces 126a, 126b. The storage controller 120 may receive data commands from the host 100, and transmit commands to and from the slow storage medium 124 and/or fast storage medium 122 for fulfilling the commands. In this regard, the storage controller 120 may include at least one processing component embedded thereon for interfacing with the host 100, the fast storage medium 122, and the slow storage medium 124. The processing component may include, for example, a digital circuit (e.g., a microcontroller, a microprocessor, a digital signal processor, or a logic device (e.g., a field programmable gate array (FPGA), an application-specific integrated circuit (ASIC), and/or the like)) capable of executing data access instructions (e.g., via firmware and/or software) to provide access to and from the data stored in the fast storage medium 122 or slow storage medium 124 according to the data access instructions.

In some embodiments, the storage controller 120 receives a data command from the host 100 and checks whether the address for the data is stored in the fast storage medium 122. In some embodiments, if the address is not in the fast storage medium 122, the storage controller 120 transmits a retry message to the host 100.

In some embodiments, the host 100 includes a retry engine 119 configured to execute instructions stored in the memory 108 for processing the retry message. The retry engine 119 may transmit a signal to the load/store unit 116 to remove or clear, from the command buffer 117, the initial data command that resulted in the retry message. In some embodiments the load/store unit 116 keeps track of the initial data command (e.g., in a separate buffer), and updates the status of the original command from "pending" to "presubmit."

In some embodiments, the retry engine 119 identifies a retry latency in the received retry message, and sets a retry time (e.g., a retry timer) based on the retry latency to signal the load/store unit 116 to transmit a second command. In some embodiments, the second command is a data command for the same data as the initial data command (e.g., an initial load command). In some embodiments, the signal identifies the original command that is held by the load/store unit 116 with a "presubmit" status, and updates the status of the command as "pending" when the second command is transmitted. In some embodiments, the second command is a different command than the initial command. For example, if the initial command was a store command, the second command is a command for status confirmation (e.g., status of the initial store command).

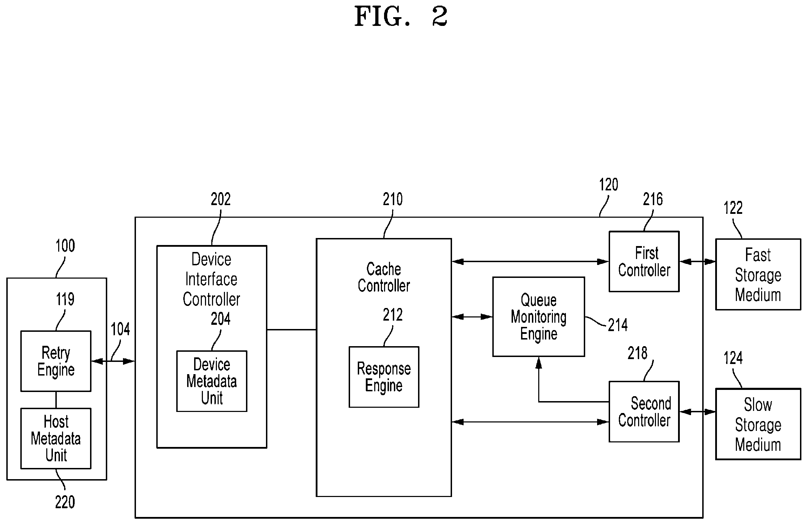

FIG. 2 depicts a block diagram of the host 100 coupled to the storage controller 120 over the one or more data communication links 104 according to one or more embodiments. In some embodiments, the storage controller 120 includes a device interface controller 202 configured to receive commands from the host 100 (e.g., the host interface controller 110). In this regard, the device interface controller 202 may include physical connections as well as software instructions for sending and receiving data to and from the host 100 using a protocol such as, for example, CXL, although embodiments are not limited thereto.

In some embodiments, the storage controller 120 includes a device metadata unit 204 configured to insert or read metadata to and from commands transmitted or received by the storage controller. For example, the metadata to be inserted by the device metadata unit 204 may include retry latency values for retry commands generated by the storage device 102. Metadata to be read by the device metadata unit 204 may include command codes (e.g., MemWrFwd, MemInv, and/or other op codes) that request status confirmation from the storage device 102.

In some embodiments, the device interface controller 202 receives data commands to load/store data from/to a specified memory address. The command may be received by a cache controller 210. The cache controller 210 may be configured to determine whether the requested memory address is found in the fast storage medium 122 (e.g., a cache hit), and issue appropriate requests to a first controller 216 or second controller 218 depending on the determination. The cache controller 210 may also be configured to manage use of the fast storage medium 122 according to a cache management algorithm.

In some embodiments, the memory address specified in the data command is retrieved from the fast storage medium 122 or the slow storage medium 124 via respectively the first controller 216 or the second controller 218, and returned for storing in the host cache memory 118. In some embodiments, the memory address specified in the data command is translated into a memory address of the fast storage medium 122 or the slow storage medium 124 via a memory mapping table.

In some embodiments, if the requested memory address is found in the fast storage medium 122, data is retrieved from the address via the first controller 216 (if the command is a load command), and returned to the host 100 to be stored in the host cache memory 118. In some embodiments, a response packet may be returned with the retrieved data. The response packet may include an indicia that indicates that the requested data is returned in response to the load command. The indicia may be added by the device metadata unit 204 to a metadata field of the response. The response may adhere, for example, to the CXL.mem protocol, although embodiments are not limited thereto.

In some embodiments, if the requested memory address is stored in the slow storage medium 124 and not in the host cache memory 118 (e.g., a cache miss), the cache controller 210 returns a retry message (or, retry command) to the host 100. The cache controller 210 may include a response engine 212 that generates the retry command. The retry command may adhere to, for example, the CXL.mem protocol, although embodiments are not limited thereto.

In some embodiments, the retry command includes a retry flag and a retry latency (e.g., a criterion). In some embodiments, the retry latency is set based on a latency estimate calculated by a queue monitoring engine 214. The queue monitoring engine 214 may estimate a latency in processing a current command by the storage controller 120 based on a number of requests in one or more queues of the storage device 102, and an estimated average execution time in processing a current request. The estimated average execution time may be based on one or more historical execution times. A range or class of retry latencies may be selected based on the estimated latency. The range of retry latencies may include, for example, 10-100 microseconds, 100-200 microseconds, etc.

In some embodiments, no additional data is returned to the host 100 with the retry command. For example, if the data command received from the host is a load command, the data that is requested by the host is not returned along with the retry command. In another example, if the data command received from the host is a write command, no write acknowledgment is returned with the retry command. Although no additional data is returned with the retry command, the storage controller 120 continues the process of reading from the slow storage medium 124 to the fast storage medium 122, or writing data to the slow storage medium (e.g., when data is to be evicted from the fast storage medium 122.

In some embodiments, the host 100 (e.g., the processor 106) includes a host metadata unit 220 configured to receive commands from the device interface controller 202 and process the metadata inserted in the commands. The command may adhere to the CXL.mem protocol, although embodiments are not limited thereto. For example, the metadata of a retry command transmitted by the device interface controller 202 may include a retry flag and a retry latency. The host metadata unit 220 may be configured to identify a retry command based on the retry flag being set, and forward the retry command to the retry engine 119 for taking a corresponding retry action.

In some embodiments, the retry engine 119 is configured to communicate with the load/store unit 116 to remove or clear the data command associated with a received retry command from the command buffer 117. In this manner, stalling of the CPU core 112 due to the CPU core waiting for the data command to finish processing may be reduced or avoided, and the CPU core may move to process other commands in the command buffer 117.

The retry engine 119 may schedule transmitting of a second command based on the retry latency (e.g., criterion) in the received retry command. In some embodiments, the retry engine 119 is configured to detect fulfillment of the criterion, and transmit the second command based on detecting the fulfillment of the criterion. In this regard, the retry engine 119 may wait an amount of time within the specified retry latency, and transmit a signal to the load/store unit 116 to transmit a second command. The expiration of the amount of time may be deemed to be fulfillment of the criterion. The second command may be the same or similar to the first command. For example, the second command may be a request to load the same data as the first command. In the event the first command was a store command, the second command may be a request for status confirmation of the store process.

Although one or more components of FIG. 2 are assumed to be separate components, a person of skill in the art will recognize that the functionality of the components may be combined or integrated into a single component, or further subdivided into further sub-components without departing from the scope of the inventive concept.

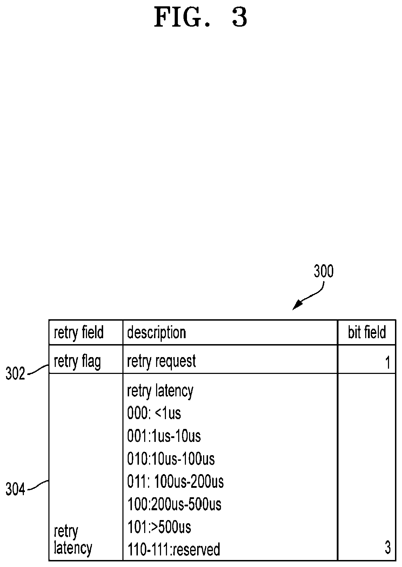

FIG. 3 depicts a conceptual diagram of a retry command 300 generated by the response engine 212 according to one or more embodiments. The retry command 300 may include a retry flag 302 and a retry latency identifier (ID) 304. The retry flag 302 may include one bit that may be set or unset depending on whether a retry is requested or not. The retry latency ID 304 may include 3 bits for identifying a retry class or period. The retry period may include less than 1 microseconds (retry latency ID 000), between 1 and 10 microseconds (retry latency ID 001), and the like. The retry period may be identified based on the estimated latency of processing requests by the storage controller 120, where the estimated latency is provided by the queue monitoring engine 214. In some embodiments, the longer the estimated latency, the longer the retry latency.

In some embodiments, the retry command 300 is generated and transmitted to the host 100 according to the CXL.mem protocol. In this regard, the retry command 300 is transmitted via a subordinate-to-master (S2M) non-data response (NDR) channel provided by the CXL.mem protocol. In some embodiments, the retry command 300 is included in a reserved field of a S2M NDR message.

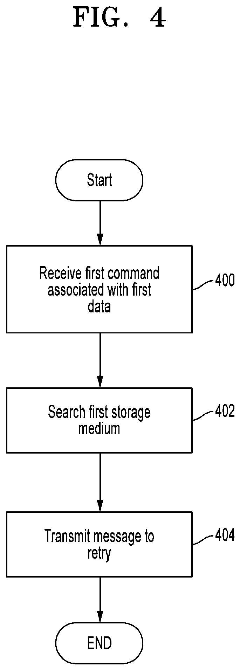

FIG. 4 depicts a flow diagram of a process for data command processing by a storage device according to one or more embodiments. The process starts, and in act 400, the storage controller 120 receives a first request or command associated with first data from a computing device (e.g., the host 100). The command may be a load or store command for data stored in a memory location.

In act 402 the storage controller 120 searches a first storage medium (e.g., the fast storage medium 122) for processing the first command. In some embodiments, the cache controller 210 determines whether the fast storage medium 122 includes the memory location included in the first command.

Based on the search of the first storage medium, the storage controller 120 transmits, in act 404, a message to the computing device (e.g., the host 100). The message may be, for example, a retry message. Based on the message, the computing device may transmit a second command associated with the first data to the storage device.

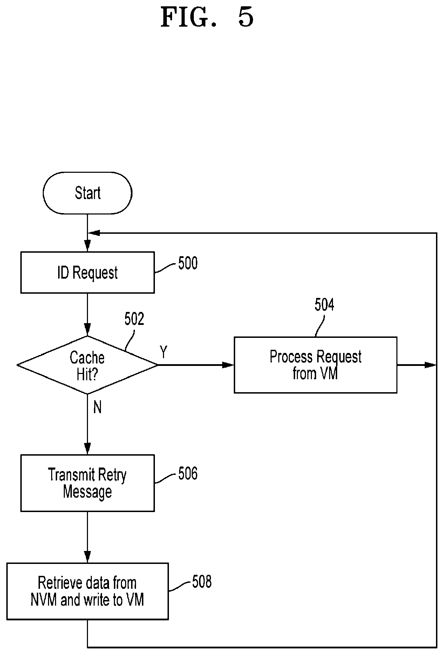

FIG. 5 depicts another flow diagram of a process for data command processing by a storage device according to one or more embodiments. The process starts, and in act 500, the storage controller 120 identifies a load or store request or command from an application 114 running on the host 100. The load or store request may be associated with a memory address.

The data command may be processed by the device metadata unit 204 for determining the type of command. In some embodiments, load and store commands are transmitted to the cache controller 210 for determining, in act 502, whether the command results in a cache hit. In some embodiments, a cache hit may be determined when the memory address of the request is found in the fast storage medium 122.

If the answer is YES, the data command is processed from the fast storage medium 122 in act 504. In this regard, if the data command is a load command, the requested data is retrieved from the fast storage medium 122 and transmitted to the host 100 as a response to the load command. If the data command is a store command, the data that is written is retrieved from the memory 108 of the host 100, and written into the fast storage medium 122. In some cases, data may need to be evicted from the fast storage medium 122 to make room for the new data to be stored.

Referring again to act 502, if the command does not result in a cache hit, a retry message is generated and transmitted by the response engine 212. In some embodiments, the retry latency is determined based on the latency estimated by the queue monitoring engine 214 for processing a pending command.

In act 508, the storage controller 120 continues to process the data command and retrieves data for fulfilling the data command from the slow storage medium 124 and stores the data in the fast storage medium 122. In this manner, when the host 100 re-transmits the data command after the retry period has expired, the requested memory location is expected to be present in the fast storage medium 122.

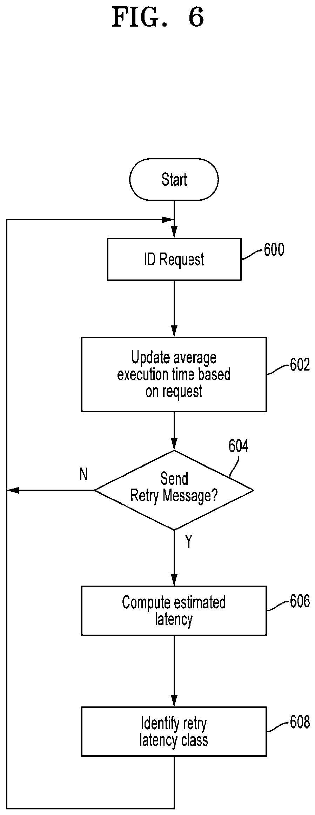

FIG. 6 depicts a block diagram of a process for identifying a retry latency according to one or more embodiments. In some embodiments, the queue monitoring engine 214 computes a moving or running latency value for the storage device 102 based on latencies experienced in processing one or more prior requests, the latency experienced in processing a current request, and pending requests in one or more queues of the storage device. Latency of a request may be determined based on execution time of the request. For example, the execution time may be the time that the storage device 102 takes in retrieving data from slow storage medium 124, referred to as a round-trip time.

The process starts, and in act 600, a request is identified by the queue monitoring engine 214. The request may be, for example, a request identified by the storage controller 120 for loading or storing data.

In act 602, the queue monitoring engine 214 updates an average execution time based on the request. In some embodiments, the execution time is based on a round trip counter for the request. The average execution time or round trip time $t_n$ may be calculated based on the following formula:

$$t_n=(1-a)(t_{n-1})+a(1/fc * c_i)$$

where a is a coefficient or weight value between 0 and 1, $t_{n-1}$ is a historical or prior execution time for a prior request (n-1), $c_i$ is a counter of the number of round-trip clocks for the request, and fc is the clock frequency. Although the above formular contemplates computing the average execution time based on an immediately prior execution time $t_{n-1}$, a person of skill in the art should recognize that two or more other historical execution times (e.g., $t_{n-2}$, $t_{n-3}$, etc.) may be used to compute the average execution time.

The counter $c_i$ may start at 0 and increase at each clock cycle until the request has been fulfilled (e.g., when the requested data has been retrieved from the slow storage medium 124). The coefficient a may be a set so as to give more or less weight to a current execution time versus a prior execution time, in calculating the average execution time. For example, if a = 0, the current execution time is ignored, and the historical execution time is used for computing the average execution time. If a = 1, the historical execution time is ignored, and the current execution time is used for computing the average execution time.

In act 604, a determination is made as to whether a retry command is to be generated. If the answer is NO, the queue monitoring engine 214 continues to update the running average latency based on requests processed by the storage controller 120.

If the answer is YES, the queue monitoring engine 214 computes an estimated latency in act 606 based on the current average execution time. In some embodiments, the estimated latency *lat* is computed based on the following formula:

$$lat = q_c * t_n$$

where $q_c$ is a number of commands in one or more queues of the storage device 102. In this regard, the storage device 102 may buffer load or store commands from the host 100 in the one or more queues for processing by the storage controller 120. The one or more queues may include read request queues, write request queues, NAND read queues, NAND write queues, and/or the like. The NAND queues may be separately maintained by the second controller 218 for requests to read and store data from and to the slow storage medium 124 (e.g., in the event of a cache miss).

In act 608, the queue monitoring engine 214 (or the response engine 212), may select a retry latency value based on the computed latency. In this regard, the retry latency class or range to which the latency value falls may be identified, and the value for the identified class or range may be set as the retry latency. The selection of the retry latency based on the anticipated latency of the storage device allows the host 100 to efficiently schedule the retry of an initially transmitted command based on the latency feedback.

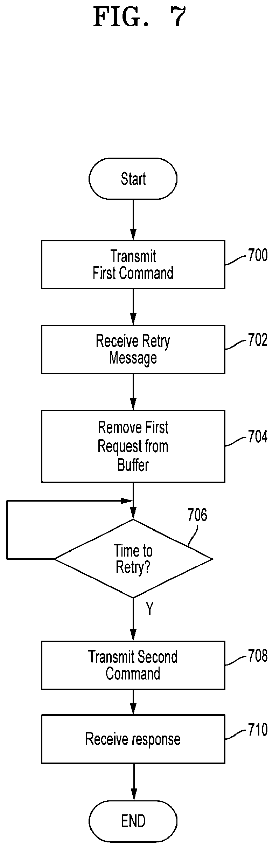

FIG. 7 depicts a flow diagram of a process for sending and receiving commands to and from the storage device 102 according to one or more embodiments. The process starts, and in act 700, the host 100 transmits a first data command. In some embodiments, an application 114 running on the processor 106 may place the first data command (or a request associated with the first data command) in the command buffer 117, and the load/store unit 116 may retrieve and transmit the first data command to the storage device 102.

In act 702, the processor 106 receives a retry command in response to the first data command resulting in a cache miss, which results in added latency on the part of the storage device 102 in fulfilling the command. In some embodiments, the retry command is included in a reserved field of a S2M NDR message. The message may identify the first command to which the retry command relates.

In some embodiments, the host metadata unit 220 receives the message from the storage device 102 and determines that the retry flag has been set. The host metadata unit 220 may transmit a signal to the retry engine 119 based on the retry flag being set, along with an identifier of the first command and the retry latency that was included in the message.

In act 704, the retry engine 119 signals the load/store unit 116 to remove the first data command from the command buffer 117 based on the retry command. The removing of the first data command that is anticipated to have an added latency allows the freeing up of such long latency commands that may otherwise saturate the command buffer and prevent further commands from being processed, and improve processor core utilization.

In act 706, the retry engine 119 checks the retry latency for determining whether it is time for a retry of the initial command. For example, the retry engine 119 may wait until the retry latency period has expired (e.g., the minimum or maximum retry time of the retry latency range) before attempting to retry the command.

If it is time to retry, the retry engine 119 transmits a second command to the storage device 102 in act 708. In some embodiments, the second request is the same as the initial request. For example, if the initial command is a load command for data stored in a memory location, the second command is also a load command for the same data. If the initial command is a store command, the second command may be a command for status confirmation for the initial store command. The second command may be transmitted via a master-to-subordinate (M2S) channel that sets a command code of the message to one that requests the status confirmation (e.g., MemWrFwd, MemInv, and/or other op codes) from the storage device 102.

In act 710, the host 100 receives a response to the second command. For example, for a retried load command, the host 100 receives the requested data from the volatile memory (or, fast storage medium (122)) of the storage device 102. For a second command that requests for status confirmation of an initial store command, the response may be confirmation that the initial data has been stored. The waiting of a retry period and transmitting the second command may result in a reduction of the latency from NAND read latency to device memory latency.

The load/store unit 116, retry engine 119, device metadata unit 204, response engine 212, queue monitoring engine 214, and host metadata unit 220 may be implemented using software, firmware, hardware, or a combination of software, firmware, or hardware. For example, one or more of the engines or units may be implemented via a processing component such as, for example, a microcontroller, a microprocessor, a digital signal processor, or a logic device (e.g., a field programmable gate array (FPGA), an application-specific integrated circuit (ASIC), and/or the like)) capable of executing instructions (e.g., via firmware and/or software) to achieve the described functionalities.

One or more embodiments of the present disclosure may be implemented in one or more processors. The term processor may refer to one or more processors and/or one or more processing cores. The one or more processors may be hosted in a single device or distributed over multiple devices (e.g. over a cloud system). A processor may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processor, as used herein, each function is performed either by hardware configured, i.e., hard-wired, to perform that function, or by more general-purpose hardware, such as a CPU, configured to execute instructions stored in a non-transitory storage medium (e.g. memory). A processor may be fabricated on a single printed circuit board (PCB) or distributed over several interconnected PCBs. A processor may contain other processing circuits; for example, a processing circuit may include two processing circuits, an FPGA and a CPU, interconnected on a PCB.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the spirit and scope of the inventive concept.

The terminology used herein is for the purpose of describing particular embodiments only and is not intended to be limiting of the inventive concept. Also, unless explicitly stated, the embodiments described herein are not mutually exclusive. Aspects of the embodiments described herein may be combined in some implementations.

As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

Although exemplary embodiments of systems and methods for data command processing have been specifically described and illustrated herein, many modifications and variations will be apparent to those skilled in the art. Accordingly, it is to be understood that systems and methods for data command processing constructed according to principles of this disclosure may be embodied other than as specifically described herein. The disclosure is also defined in the following claims, and equivalents thereof.

The systems and methods for data command processing may contain one or more combination of features set forth in the below statements.

Statement 1. A storage device comprising: a first storage medium; a second storage medium; and a processor configured to: receive from a computing device a first command associated with first data; search the first storage medium for processing the first command; and based on the search of the first storage medium, transmit a message to the computing device, wherein based on a transmission of the message, the storage device is configured to receive a second command associated with the first data from the computing device.

Statement 2. The storage device of claim 1, wherein the first command includes a command to load the first data, wherein based on the search of the first storage medium, the processor is further configured to retrieve the first data from the second storage medium and store the first data in the first storage medium.

Statement 3. The storage device of claim 2, wherein the processor is further configured to: retrieve the first data from the first storage medium based on receipt of the second command and transmit the first data to the computing device.

Statement 4. The storage device of claim 1, wherein the first command includes a command to store the first data, wherein based on the search of the first storage medium, the processor is further configured to: identify second data in the second storage medium associated with an address of the first data; write the second data into the first storage medium; and update the second data with the first data.

Statement 5. The storage device of claim 1, wherein the message includes a criterion, wherein the processor is further configured to receive the second command based on the computing device detecting the fulfillment of the criterion.

Statement 6. The storage device of claim 5, wherein the processor is further configured to: determine estimated latency of the storage device; and determine the criterion based on the estimated latency.

Statement 7. The storage device of claim 1, wherein the message includes a flag, wherein the processor is further configured to receive the second command based on the computing device detecting the flag.

Statement 8. The storage device of claim 1, wherein the second command includes a command to load or store the first data.

Statement 9. The storage device of claim 1, wherein the second command includes a command for receiving status of writing the first data.

Statement 10. The storage device of claim 1, wherein the first storage medium includes a volatile memory, and the second storage medium includes non-volatile memory.

Statement 11. A method comprising: receiving by a storage device a first command associated with first data; searching by the storage device a first storage medium of the storage device for processing the first command; and based on searching the first storage medium, transmitting a message to a computing device, wherein based on the message, the computing device is configured transmit a second command associated with the first data.

Statement 12. The method of claim 11, wherein the first command includes a command to load the first data, the method further comprising: based on searching the first storage medium, retrieving the first data from a second storage medium of the storage device and storing the first data in the first storage medium.

Statement 13. The method of claim 12 further comprising: receiving by the storage device the second command; and retrieving the first data from the first storage medium and transmitting the first data to the computing device.

Statement 14. The method of claim 11, wherein the first command includes a command to store the first data, the method further comprising: based on the searching the first storage medium: identifying second data in a second storage medium of the storage device associated with an address of the first data; writing the second data into the first storage medium; and updating the second data with the first data.

Statement 15. The method of claim 11, wherein the message includes a criterion, the method further comprising: detecting, by the computing device, fulfillment of the criterion; and transmitting, by the computing device, the second command based on detecting the fulfillment of the criterion.

Statement 16. The method of claim 15 further comprising: determining an estimated latency of the storage device; and determining the criterion based on the estimated latency.

Statement 17. The method of claim 11, wherein the message includes a flag, the method further comprising: generating the second command based on detecting the flag.

Statement 18. The method of claim 11, wherein the second command includes a command to load or store the first data.

Statement 19. The method of claim 11, wherein the second command includes a command for receiving status of writing the first data.

Statement 20. The method of claim 11, wherein the first storage medium includes a volatile memory.

**Claims**

1. A storage device comprising:

   a first storage medium (122);
   a second storage medium (124); and
   a processor (120) configured to:

   receive from a computing device (100) a first command associated with first data;
   search the first storage medium (122) for processing the first command; and
   based on the search of the first storage medium (122), transmit a message to the computing device (100), wherein based on a transmission of the message, the storage device is configured to receive a second command associated with the first data from the computing device (100).

2. The storage device of claim 1, wherein the first command includes a command to load the first data, wherein based on the search of the first storage medium (122), the processor (120) is further configured to retrieve the first data from the second storage medium (124) and store the first data in the first storage medium (122).

3. The storage device of claim 2, wherein the processor (120) is further configured to:
   retrieve the first data from the first storage medium (122) based on receipt of the second command and transmit the first data to the computing device (100).

4. The storage device of claim 1, wherein the first command includes a command to store the first data, wherein based on the search of the first storage medium (122), the processor (120) is further configured to:

   identify second data in the second storage medium (124) associated with an address of the first data;
   write the second data into the first storage medium (122); and
   update the second data with the first data.

5. The storage device of any one of claims 1 to 4, wherein the message includes a criterion, wherein the processor (120) is further configured to receive the second command based on the computing device (100) detecting the fulfillment of the criterion.

6. The storage device of claim 5, wherein the processor (120) is further configured to:

   determine estimated latency of the storage device; and
   determine the criterion based on the estimated latency.

7. The storage device of any one of claims 1 to 4, wherein the message includes a flag, wherein the processor (120) is further configured to receive the second command based on the computing device (100) detecting the flag.

8. A method comprising:

   receiving by a storage device a first command associated with first data;
   searching by the storage device a first storage medium (122) of the storage device for processing the first command; and
   based on searching the first storage medium (122), transmitting a message to a computing device (100), wherein based on the message, the computing device (100) is configured to transmit a second command associated with the first data.

9. The method of claim 8, wherein the first command includes a command to load the first data, the method further comprising:
   based on searching the first storage medium (122), retrieving the first data from a second storage medium (124) of the storage device and storing the first data in the first storage medium (122).

10. The method of claim 9 further comprising:

   receiving by the storage device the second command; and
   retrieving the first data from the first storage medium (122) and transmitting the first data to the computing device (100).

11. The method of claim 8, wherein the first command includes a command to store the first data, the method further comprising:
   based on the searching the first storage medium (122):

   identifying second data in a second storage medium (124) of the storage device associated with an address of the first data;
   writing the second data into the first storage medium (122); and
   updating the second data with the first data.

12. The method of any one of claims 8 to 11, wherein the message includes a criterion, the method further comprising:

detecting, by the computing device (100), fulfillment of the criterion; and
transmitting, by the computing device (100), the second command based on detecting the fulfillment of the criterion, and
wherein the method exemplarily further comprises:

determining an estimated latency of the storage device; and
determining the criterion based on the estimated latency.

13. The method of any one of claims 8 to 11, wherein the message includes a flag, the method further comprising:
generating the second command based on detecting the flag.

14. The storage device or the method of any one of the preceding claims, wherein the second command includes a command to load or store the first data, and/or
wherein the second command includes a command for receiving a status of writing the first data.

15. The storage device or the method of any one of the preceding claims, wherein the first storage medium (122) includes a volatile memory and/or wherein the second storage medium (124) includes a non-volatile memory.

# FIG. 1

FIG. 2

# FIG. 3

300

| retry field | description | bit field |
|---|---|---|
| retry flag | retry request | 1 |
| retry latency | retry latency<br>000: <1us<br>001:1us-10us<br>010:10us-100us<br>011: 100us-200us<br>100:200us-500us<br>101:>500us<br>110-111:reserved | 3 |

302

304

# FIG. 4

```
        ┌─────────┐
        │  Start  │
        └────┬────┘
             │
             ▼
   ┌──────────────────┐
   │ Receive first    │
   │ command          │────400
   │ associated with  │
   │ first data       │
   └────────┬─────────┘
            │
            ▼
   ┌──────────────────┐
   │ Search first     │────402
   │ storage medium   │
   └────────┬─────────┘
            │
            ▼
   ┌──────────────────┐
   │ Transmit message │────404
   │ to retry         │
   └────────┬─────────┘
            │
            ▼
        ┌─────────┐
        │   END   │
        └─────────┘
```

# FIG. 5

Start

ID Request — 500

502

Cache Hit?

Y → Process Request from VM — 504

N

Transmit Retry Message — 506

Retrieve data from NVM and write to VM — 508

# FIG. 6

```
              ┌─────────┐
              │  Start  │
              └────┬────┘
                   │
      ┌────────────┼
      │            ▼
      │      ┌──────────────┐
      │      │  ID Request  │──── 600
      │      └──────┬───────┘
      │             │
      │             ▼
      │      ┌──────────────┐
      │      │ Update average│
      │      │ execution time│──── 602
      │      │ based        │
      │      │ on request   │
      │      └──────┬───────┘
      │             │      604
      │             ▼    ╱
      │        ◇───────────◇
    N │◄───────│   Send     │
      │        │ Retry      │
      │        │ Message?   │
      │        ◇─────┬─────◇
      │              │ Y
      │              ▼
      │      ┌──────────────┐
      │      │Compute estimated│──── 606
      │      │   latency    │
      │      └──────┬───────┘
      │             │
      │             ▼
      │      ┌──────────────┐
      │      │Identify retry│──── 608
      │      │ latency class│
      │      └──────┬───────┘
      │             │
      └─────────────┘
```

# FIG. 7

```
                    ( Start )
                        │
                        ▼
              ┌──────────────────┐
              │     Transmit      │── 700
              │  First Command    │
              └──────────────────┘
                        │
                        ▼
              ┌──────────────────┐
              │   Receive Retry   │── 702
              │     Message       │
              └──────────────────┘
                        │
                        ▼
              ┌──────────────────┐
              │   Remove First    │
              │   Request from    │── 704
              │      Buffer       │
              └──────────────────┘
                        │
            ┌──────────▶│
            │           ▼
            │         ╱─────╲      706
            │        ╱ Time to ╲──╱
            └───────╲  Retry?  ╱
                     ╲─────╱
                        │ Y
                        ▼
              ┌──────────────────┐
              │  Transmit Second  │── 708
              │     Command       │
              └──────────────────┘
                        │
                        ▼
              ┌──────────────────┐
              │ Receive response  │── 710
              └──────────────────┘
                        │
                        ▼
                    ( END )
```

Europäisches
Patentamt

European
Patent Office

Office européen
des brevets

# EUROPEAN SEARCH REPORT

**Application Number**

EP 25 19 2349

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/030405 A1 (KUNIMATSU ATSUSHI [JP] ET AL) 2 February 2012 (2012-02-02) * paragraphs [0002], [0003], [0013] - [0128]; figures 1-9 * | 1-15 | INV. G06F3/06 ADD. G06F12/0802 |
| X | US 2013/036265 A1 (BERT LUCA [US] ET AL) 7 February 2013 (2013-02-07) * paragraphs [0002] - [0005], [0011] - [0022]; figures 1-2 * | 1,8 | |
| X | US 2020/356278 A1 (GUPTA LOKESH M [US] ET AL) 12 November 2020 (2020-11-12) * paragraphs [0001] - [0009], [0034] - [0079]; figures 1-14 * | 1,8 | |

**TECHNICAL FIELDS SEARCHED (IPC)**

G06F

The present search report has been drawn up for all claims

| Place of search | Date of completion of the search | Examiner |
|---|---|---|
| The Hague | 29 October 2025 | Limacher, Rolf |

EPO FORM 1503 03.82 (P04C01)

## ANNEX TO THE EUROPEAN SEARCH REPORT
## ON EUROPEAN PATENT APPLICATION NO.

EP 25 19 2349

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2025

| Patent document cited in search report | Publication date | Patent family member(s) | | Publication date |
|---|---|---|---|---|
| US 2012030405 A1 | 02-02-2012 | CN | 102346682 A | 08-02-2012 |
| | | JP | 2012033001 A | 16-02-2012 |
| | | KR | 20120012377 A | 09-02-2012 |
| | | US | 2012030405 A1 | 02-02-2012 |
| US 2013036265 A1 | 07-02-2013 | NONE | | |
| US 2020356278 A1 | 12-11-2020 | NONE | | |

EPO FORM P0459

For more details about this annex : see Official Journal of the European Patent Office, No. 12/82